# EUROPEAN PATENT APPLICATION

(11) **EP 3 369 997 A1**
(43) Date of publication of application: **05.09.2018**
(21) Application number: 17738630.7
(22) Date of filing: 11.01.2017
(51) Int. Cl.: F24C 7/02, F24C 7/08, F24C 15/22, F24C 15/24, F24C 15/32

(54) **COOKING APPLIANCE AND METHOD FOR CONTROLLING COOKING APPLIANCE**

(30) Priority: 12.01.2016 KR 20160003625
(71) Applicant: Samsung Electronics Co., Ltd., Suwon-si, Gyeonggi-do 16677 (KR)
(72) Inventor: SHIN, Hyun Shik, Suwon-si Gyeonggi-do 16682 (KR); LIM, Gyu Sik, Suwon-si Gyeonggi-do 16543 (KR); CHANG, Hong Man, Hwaseong-si Gyeonggi-do 18442 (KR)
(74) Representative: Gulde & Partner
(86) International application number: PCT/KR2017/000368
(87) International publication number: WO 2017/123001

(57) **Abstract**

A cooking apparatus comprises a cooking chamber formed with a cooking space; a heat source installed inside the cooking chamber, and emitting a heat; a reflector configured to reflect the heat emitted from the heat source to the cooking space; and a fan configured to operate or stop operating while heat is being emitted from the heat source, and to introduce air into the cooking chamber during the operation.

## Description

### [Technical Field]

The present disclosure relates to a cooking apparatus and a method of controlling the cooking apparatus.

### [Background Art]

A cooking apparatus is an apparatus for heating and cooking a cooking object such as food and refers to an apparatus capable of providing several functions in relation to cooking of a cooking object such as heating, thawing, drying, and sterilizing. Ovens such as a gas oven and an electric oven, a microwave heating apparatus (hereinafter, referred to as a microwave), a gas stove, an electric stove, a gas grill, an electric grill, and the like are examples of cooking apparatuses.

An oven is an apparatus capable of roasting, frying, steaming, boiling, or thawing the cooking object by using a cooking chamber that provides a cooking space and a heating means that heats an inside of the cooking chamber. When a user inserts the cooking object into the cooking chamber and closes the cooking chamber, the oven cooks the cooking object inserted into the cooking chamber by applying a certain heat to the cooking object. Ovens may be classified into a gas oven that obtains heat to be applied to the cooking object by burning a gas and an electric oven that obtains heat to be applied to the cooking object by converting electrical energy into heat energy.

### [Disclosure]

### [Technical Problem]

The present disclosure is directed to provide a cooking apparatus capable of improving cooking time and cooking performance, and a method of controlling the cooking apparatus.

Further, the present disclosure is directed to provide a cooking apparatus capable of improving the heat efficiency and cooking food uniformly by simultaneously using radiant heat generated from a heat source, reflected heat reflected by a reflector, and convection heat flowing inside a cooking cavity, and a method of controlling the cooking apparatus.

### [Technical Solution]

Provided are a cooking apparatus and a method of controlling the cooking apparatus to solve the above-described problems.

One aspect of the present disclosure provides a cooking apparatus including: a cooking chamber with a cooking space formed inside the cooking chamber; a heat source installed inside the cooking chamber, and configured to emit heat; a reflector configured to receive a portion of the heat emitted from the heat source, and to reflect the received heat to the cooking space; and a fan configured to operate or stop operating while heat is being emitted from the heat source, and to introduce air into the cooking chamber during the operation.

The fan may alternate between the operation and the stop according to a predetermined pattern.

The fan may operate during a first period and stop during a second period relatively shorter than the first period.

A convection heat may be generated in the cooking chamber during the first period, and the convection heat may disappear in the cooking chamber during the second period.

The fan may introduce external air and transfer the introduced air into the cooking chamber.

The cooking apparatus may further include: a hole formed on an outer surface of the cooking chamber and configured to allow the air introduced through the fan to be introduced into the cooking chamber; and a duct configured to guide the air introduced by the fan to the hole.

The cooking apparatus may further include a microwave emitter configured to be cooled by the air introduced by the fan.

The cooking apparatus may further include a first inputter configured to receive a user command related to the operation of the heat source and the fan.

The heat source may emit heat in response to manipulation of the first inputter, and the fan may operate or stop according to a predefined pattern.

The first inputter may include at least one of a physical button, a touch button, a touch pad, a knob, a joystick, or a touch cleaner.

The cooking apparatus may further include a second inputter configured to receive a user command related to the additional operation of at least one of the heat source or the fan after the heat source has finished emitting the heat.

The reflector may be recessed in a direction opposite to the cooking space.

Another aspect of the present disclosure provides a method of controlling a cooking apparatus, including: generating heat in a heat source provided inside a cooking chamber, and transferring some of the generated heat into the cooking chamber by being reflected by the reflector; generating convection heat by introducing the air into the cooking chamber according to operating of a fan; and stopping the operation of the fan according to a predetermined setting.

The method may further include manipulating a first inputter, and starting operation of the cooking apparatus according to manipulation of the first inputter.

The method may further include operating and stopping the fan repeatedly until a predetermined time.

The predetermined time may include a preset cooking finish time.

### [Advantageous Effects]

The cooking time of the food is shortened and the cooking performance of the cooking apparatus is improved.

It is possible to obtain an effect of improving the heat efficiency while simultaneously cooking the food uniformly by cooking the food using all the radiation heat generated from the heat source, the reflected heat reflected by the reflector, and the convection heat flowing inside the cooking cavity.

A user can have an improved satisfaction since the food can be cooked quickly and appropriately..

A user can operate the cooking apparatus intuitively and easily, and further, it is possible to perform additional cooking for the food more easily to the user's taste.

It is possible to further enhance the browning effect in performing the cooking.

### [Description of the Drawings]

FIG. 1 is a perspective view illustrating an outer shape of a cooking apparatus according to an embodiment.
FIG. 2 is a view illustrating a state in which a door of the cooking apparatus is opened according to an embodiment.
FIG. 3 is a rear view illustrating the cooking apparatus according to an embodiment.
FIG. 4 is a front view illustrating the cooking apparatus according to an embodiment.
FIG. 5 is a view illustrating the cooking apparatus in which an external housing is removed according to an embodiment.
FIG. 6 is a first view illustrating a cooking chamber interior space according to an embodiment.
FIG. 7 is a second view illustrating the cooking chamber interior space according to an embodiment.
FIG. 8 is a third view illustrating the cooking chamber interior space according to an embodiment.
FIG. 9 is a perspective view illustrating a heat source according to an embodiment.
FIG. 10 is a perspective view illustrating a reflector according to an embodiment.
FIG. 11 is a front view illustrating the reflector according to an embodiment.
FIG. 12 is a bottom view illustrating the reflector according to an embodiment.
FIG. 13 is a view illustrating an example in which the reflector is coupled to the upper frame.
FIG. 14 is a first view illustrating an example in which the heat source and the reflector are disposed.
FIG. 15 is a second view illustrating an example in which the heat source and the reflector are disposed.
FIG. 16 is a side view illustrating an electronic component chamber according to an embodiment.
FIG. 17 is a view illustrating an example in which air introduced by a fan is transferred to the cooking chamber.
FIG. 18 is a view illustrating an example of a duct connecting the electronic component chamber and the cooking chamber.
FIG. 19 is a view illustrating an example of the flow of air introduced into the cooking chamber.
FIG. 20 is a control block diagram illustrating the control flow of the cooking apparatus according to an embodiment.
FIG. 21 is a view illustrating an example in which a first inputter is operated.
FIGS. 22A and 22B are graphs illustrating an example of the operation of the heat source and the fan according to the operation of the first inputter.
FIG. 23 is a view illustrating the movement of the heat inside the cooking chamber when the air is introduced.
FIG. 24 is a view illustrating the movement of the heat inside the cooking chamber when the introduction of air is stopped.
FIG. 25 is a view illustrating an example in which a second inputter is operated.
FIGS. 26A and 26B are graphs illustrating an example of the operation of the heat source and the fan according to the operation of the second inputter.
FIG. 27 is a first flowchart illustrating a control method of the cooking apparatus according to an embodiment.
FIG. 28 is a second flowchart illustrating a control method of the cooking apparatus according to an embodiment.

### [Mode of the Invention]

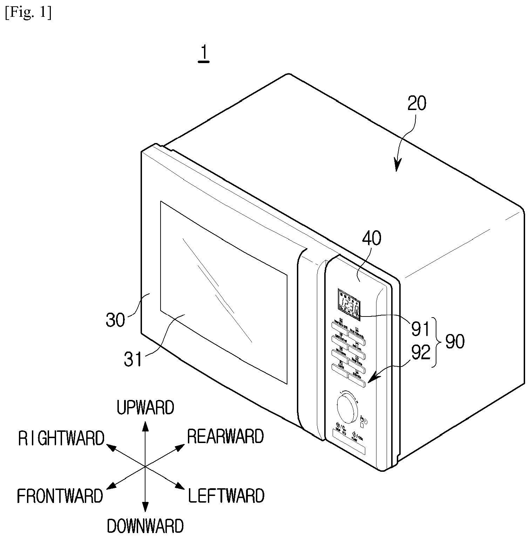

A cooking apparatus according to an embodiment of the present disclosure will hereinafter be described with reference to FIGS. 1 to 26.

Hereinafter, for convenience of description, a direction in which a door 30 is installed in a cooking apparatus 1 will be referred to as a frontward direction and a direction opposite to the frontward direction will be referred to as a rearward direction. Also, when the cooking apparatus 1 is installed using a general method, a direction toward the ground will be referred to as a downward direction and a direction opposite to the downward direction will be referred to as an upward direction. Also, one of directions intersecting with both a line segment that connects the upward direction to the downward direction and a line segment that connects the frontward direction and the rearward direction will be referred to as a leftward direction and a direction opposite to the leftward direction will be referred to as a rightward direction. However, the above-described directions are defined merely for convenience of description with respect to the cooking apparatus 1 and may be freely defined according to a selection of a designer.

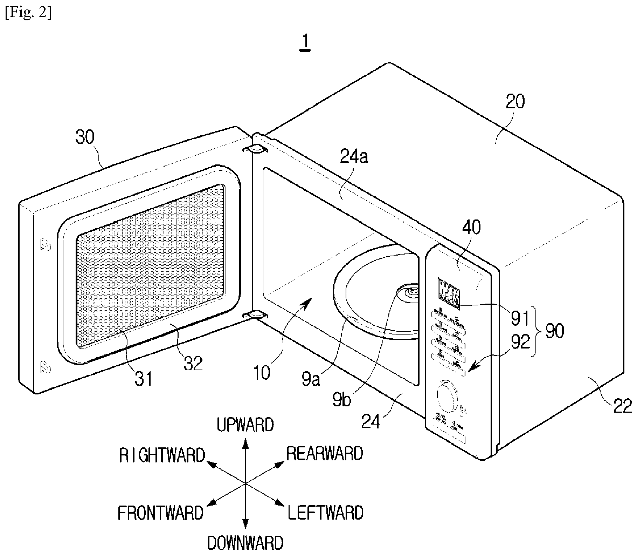

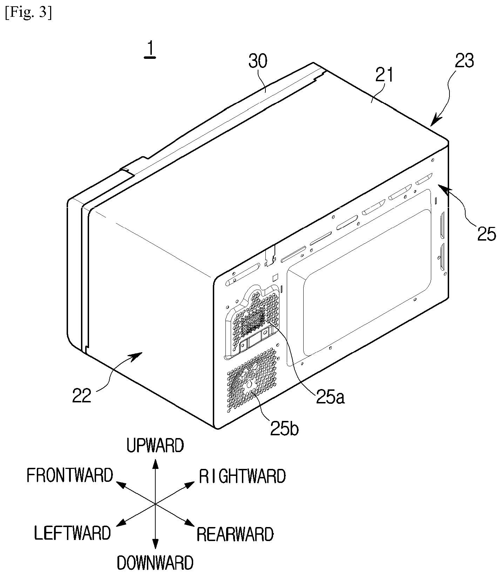

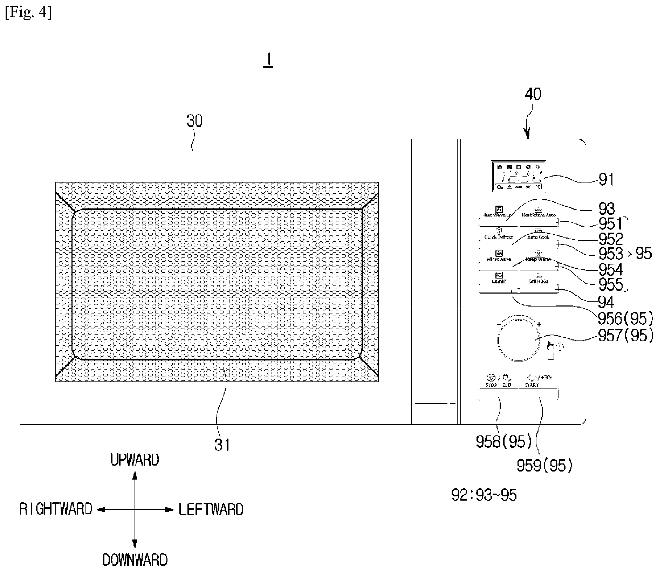

FIG. 1 is a perspective view illustrating an outer shape of the cooking apparatus according to an embodiment, FIG. 2 is a view illustrating a state in which a door of the cooking apparatus is opened according to an embodiment, FIG. 3 is a rear view illustrating the cooking apparatus, and FIG. 4 is a front view illustrating the cooking apparatus according to an embodiment.

Referring to FIGS. 1 to 4, the cooking apparatus 1 may include an external housing 20 configured to form an overall exterior of the cooking apparatus 1, the door 30 provided in front of the external housing 20, and a user interface panel 40 provided on a side surface of the door 30.

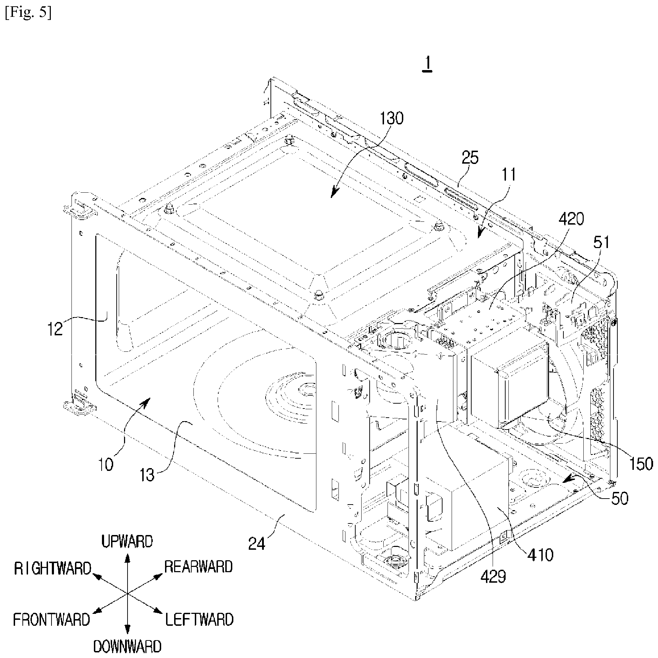

The external housing 20 may include an upper frame 21, two side frames 22 and 23, a front frame 24, a rear frame 25 and a lower frame. The front frame 24 may be provided with an opening 24a allowing the cooking object, which is to be cooked, to be inserted into and withdrawn from a cooking camber 10 and being closed or opened by the door 30. The opening 24a may be extend and form the cooking chamber 10 in the external housing 20. The front frame 24 may be mounted with the door 30 and the user interface panel 40. The upper frame 21, the two side frames 22 and 23, the front frame 24, the rear frame 25 and the lower frame may be integrally formed as needed. According to an embodiment, the upper face frame 21 and the two side frames 22 and 23 may be integrally provided, and each of the front frame 24 and the rear frame 25 may be provided separately from the upper frame 21 and the two side frames 22 and 23 integrally provided as shown in FIG. 5.

Referring to FIG. 3, at one portion of the rear frame 25, inlets 25a and 25b through which air outside the cooking apparatus 1 flow into the cooking apparatus 1 may be provided. The inlets 25a and 25b may be provided corresponding to the positions of the fan (150 in FIG. 5) of the electronic component chamber (50 in FIG. 5), and according to rotation of the fan 150, the external air is introduced into the cooking apparatus 1 through the inlets 25a and 25b forcibly. A plurality of the inlets 25a and 25b may be provided in the rear frame 25 and particularly, the plurality of the inlets 25a and 25b may be formed in the rear frame 25 in a predetermined pattern.

The door 30 may be formed to open and close the opening 24a formed at the front surface of the external housing 20. According to embodiments, the door 30 may be hinge-coupled with the external housing 20 and pivot around a hinge shaft to open and close the opening 24a or may be slidably coupled to the external housing 20 so as to be slidable along the rail or the like to open and close the opening 24a of the front frame 24 on the front surface. In addition, the door 30 may be installed at the external housing 20 using various methods to open and close the opening 24a. According to the embodiment, the door 30 may include a transparent window 31 to allow a user to view an inside of the cooking chamber 10. Also, the door 30 may include an opening insertion portion 32 to allow the door 30 to be stably inserted into and coupled to the opening 24a. The opening insertion portion 32 may be formed around a perimeter of the transparent window 31.

A user interface panel 40 may be provided on the front surface of the cooking apparatus 1, and the user interface 90 may be provided on the user interface panel 40.

The user interface 90 may be configured to receive user commands from a user or to perform a function providing various pieces of information related to the operation of the cooking apparatus 1 or various pieces of living information to the user as necessary.

The user interface 90 may include a display 91 configured to provide various pieces of information to the user as visual images, and an inputter 92 configured to output an electrical signal corresponding to user's operating and receive a user command. According to the embodiment, the user interface 90 may further include a sound output device or a lighting device. The sound output device may output voice or sound to provide information to the user. The lighting device may output light in a predetermined color or blink in a predetermined pattern to provide information to the user. For example, the lighting device may be an incandescent lamp, a halogen lamp, a fluorescent lamp, a sodium lamp, a mercury lamp, a fluorescent mercury lamp, a xenon lamp, an arc lamp, an neon lamp, an electroluminescent lamp, LED, a light emitting diode (CCFL) lamp, a cold cathode fluorescent lamp (CCFL), or an external electrode fluorescent lamp (EEFL).

The display 91 may provide various pieces of information to the user by using symbols, characters, figures, numbers, or a combination thereof. For example, the display 91 may visibly provide the user with at least one of a current time, a set total cooking period, a period for which cooking has been performed, a remaining cooking period, a set cooking temperature, a current cooking temperature, operating mode of the cooking apparatus 1, and various pieces of information related to the operation of the cooking apparatus 1 as visual images,

According to the embodiment, the display 91 may be embodied using a cathode ray tube (CRT), various types of display panel, or the like. For example, a display panel may be embodied using a liquid crystal display (LCD) panel, a light emitting diode (LED) display panel, an organic LED (OLED) display panel, an active-matrix OLED (AMOLED) display panel or the like. According to one embodiment, the display 91 may be embodied as a touch screen. In this case, the display 91 may perform a function of the inputter 92.

The inputter 92 may receive various user commands related to the operation of the cooking apparatus 1. According to the embodiment, the inputter 92 may be embodied using at least one of various physical buttons, a keyboard device, a knob, a stick-type operation device, a mouse device, a jog & shuttle, a trackball, a track pad, a touch pad, or a touch screen.

The inputter 92 may include a first inputter 93, a second inputter 94, and a third inputter 95.

The first inputter 93 may receive a user command for starting and/or finishing cooking performed according to the alternate operation of the fan 150 as described later.

The second inputter 94 may be provided to receive a user command for starting and/or finishing cooking, which is performed while the fan 150 is alternated for a short period of time. When additional cooking is required after the cooking operation according to the operation of the first inputter 93 is completed, the user operates the second inputter 94, so that the cooking apparatus 1 may further perform additional cooking for a short period of time.

The third inputter 95 may be designed to receive various user commands for operations other than those performed by the first inputter 93 and the second inputter 94. For example, the third inputter 95 may include at least one an inputter 951 for receiving a command for automatically radiating a heat wave, an inputter 952 for receiving a command related to quick thawing, an inputter 953 for receiving a related command for cooking using microwaves only, an inputter 955 for receiving a command related to keeping warm, a command for cooking using both a microwave and a thermocouple, an inputter 956 for changing and setting various numerical values, an inputter 958 for receiving a stop command, and an inputter 959 for receiving a cooking start command. Some of these inputters 951 to 959 may be omitted according to the designer's selection, and further inputters for inputting another function may be added in addition to those 951 to 959 according to the designer's selection.

When the inputter 953 for receiving a command related to automatic cooking and the inputter 956 for receiving a command for cooking using both a microwave and a thermal quantum are operated, the fan 150 of the cooking apparatus 1 continuously rotates without repeatedly alternating the operation and stop during the cooking, so that the external air may be introduced forcibly into the cooking apparatus 1.

The inputter 957 for changing and adjusting the various numerical values may receive a command for increasing or decreasing the set temperature or for extending or shortening the cooking set time and may be implemented using a knob as shown in Fig. 4.

Hereinafter, the internal structure of the cooking apparatus 1 will be described.

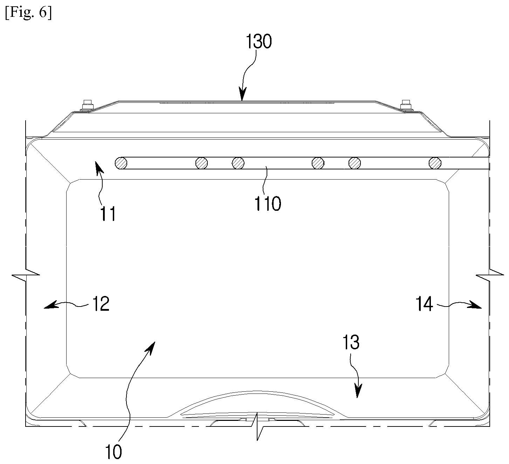

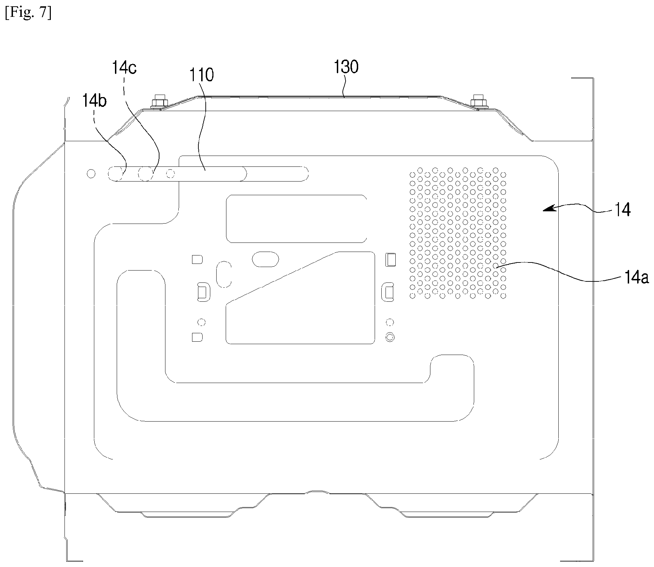

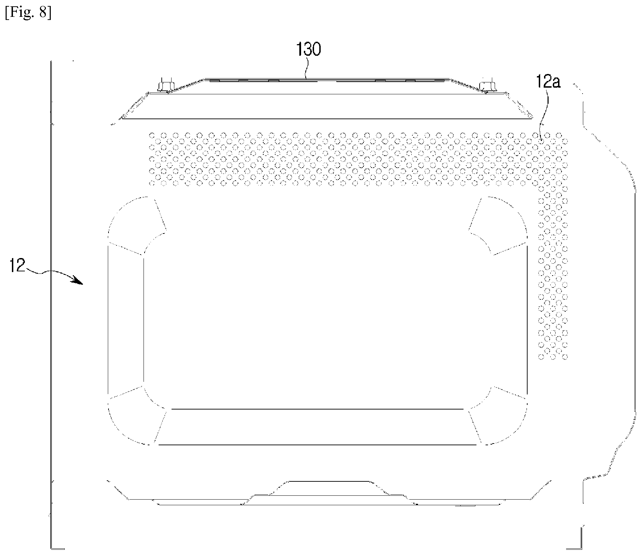

FIG. 5 is a view illustrating the cooking apparatus in which an external housing is removed according to an embodiment, FIG. 6 is a first view illustrating a cooking chamber interior space according to an embodiment, FIG. 7 is a second view illustrating the cooking chamber interior space according to an embodiment, and FIG. 8 is a third view illustrating the cooking chamber interior space according to an embodiment.

Referring to FIG. 5, the cooking chamber 10 for forming a cooking space in which the cooking object to be cooked is placed and an electronic component chamber 50 for installing various electronic components related to the operation of the cooking apparatus 1 may be formed inside the cooking apparatus 1 .

Referring to FIG. 6, the cooking chamber 10 may be formed by assembling the upper frame 11, the side frames 12 and 14, the lower frame 13, and the rear frame 25 of the external housing 20. In this case, the upper frame 11, the side frames 12, and 14, the lower frame 13, and the rear frame 25 of the external housing 20 may be assembled in the form of a hexahedron having one side open as shown in FIGS. 5 and 6 Thus, the cooking chamber 10 may be provided on the inside of the thus assembled hexahedron.

The upper frame 11 may form the upper surface of the cooking chamber 10. A reflector 130 may be provided on one surface of the upper frame 11 in the direction of the cooking chamber 10. In this way, the upper frame 11 may have a predetermined shape so that the reflector 130 can be installed. A heat source 110 may be installed below the upper frame 11 and away from the upper frame 11.

Referring to FIG. 7, the first side frame 14 may form the left side surface of the cooking chamber 10 and may separate the cooking chamber 10 from the electronic component chamber 50. A portion of the first side frame 14 may be provided with an inlet hole 14a passing through the first side frame 14 so that the air forcedly introduced by the fan 150 may be introduced into the cooking chamber 10. One end of the inlet hole 14a may be exposed inside the cooking chamber 10 and the other end thereof may be exposed to the electronic component chamber 50.

In addition, the first side frame 14 may be provided with the heat source 110, and the heat source insertion holes 14b and 14c. The heat source 110 may be provided to penetrate the heat source insertion holes 14b and 14c so that a part of the heat source 110 is exposed inside the electronic component chamber 50. The heat source 110 may be inserted into the heat source insertion holes 14b and 14c and fixed in the interior of the cooking chamber 10. A part of the heat source 110 exposed inside the electronic component chamber 50 may be electrically connected to a power supply 410 to receive power from the power supply 410.

Referring to FIG. 8, the second side frame 12 may form the right side of the cooking chamber 10. The second side frame 12 may be provided with a discharge hole 12a passing through the second side frame 12 so that air flowing inside the cooking chamber 10 may be discharged to the outside. The air in the cooking chamber 10 may include air introduced through the inlet hole 14a.

The lower frame 13 may form the bottom surface of the cooking chamber 10 and allow the food to be seated thereon. The frame 13 may be provided with a rotating plate 9a. When the cooking is started, the rotating plate 9a may be rotated in at least one direction about a rotary shaft 9b so that the cooking object to be cooked is also rotated in the cooking chamber 10 . According to the embodiment, a wheel (not shown), a ball (not shown), a motor (not shown), or a rail may be installed on the lower surface of the rotating plate 9a to rotate the rotating plate 9a in at least one direction.

Hereinafter, the heat source will be described.

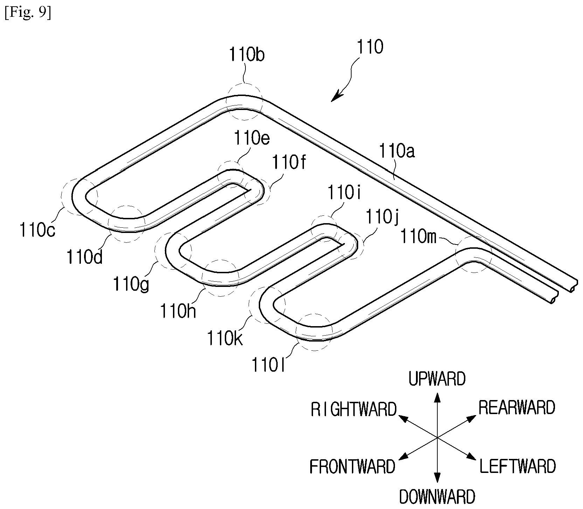

FIG. 9 is a perspective view illustrating a heat source according to an embodiment.

The heat source 110 may convert external applied electric energy into heat energy and discharge the heat into the cooking chamber 10. The heat source 110 may emit radiant heat, and the radiant heat emitted from the heat source 110 may be transferred to the cooking object inserted into the cooking chamber 10 to heat the cooking object. In addition, the heat source 110 may heat the air inside the cooking chamber 10. The heat emitted from the heat source 110 may be radiated toward the lower frame 13 where the food is disposed, but may be radiated toward the upper frame 11. The heat radiated toward the upper frame 11 may be reflected by the reflector 130 and may move toward the lower frame 13.

The heat source 110 may be installed inside the cooking chamber 10 as shown in FIG. 6, and may be installed adjacent to the upper frame 11. According to the embodiment, the heat source 110 may be installed adjacent to the side frames 12 and 14. Alternatively, the heat source 110 may also be installed adjacent to both the upper frame 11 and the side frames 12 and 14.

Referring to FIG. 9, the heat source 110 may be implemented using a heat wire 110a that emits heat rays through the electrical resistance. One end of the heat wire 110a may be inserted into the first heat source insertion hole 14b of the first side frame 14.

The heat wire 110a may have various shapes according to the embodiment. For example, as shown in FIG. 9, the heat wire 110a may have a shape of a plurality of curves 110b to 1101. More particularly, the hot wire 110a may extend in the right direction and may be curved to face the front surface 110b, and a plurality of the left curves 110c, 110e, 110g, 110i, and 110k and a plurality of the back curves 110d, 110h, 1101, and a plurality of the front curves 110f and 110j may be formed so as to have a zigzag shape. The other end of the hot wire 110a may be curved in the left direction 110m to be inserted and installed in the second heat source insertion hole 14c adjacent to the first heat source insertion hole 14b. Although FIG. 9 shows an example of the heat source 110 having a zigzag shape, the shape of the heat wire 110a is not limited thereto. For example, the heating wire 110a may have a circular or elliptical shape, or may have a plurality of concentric circular shapes.

According to the embodiment, the heat source 110 may be implemented using a halogen lamp that emits strong radiant heat.

Hereinafter, the reflector 130 will be described in detail.

The reflector 130 may be provided between the heat source 110 and the upper frame 11. The reflector 130 may reflect heat, which is emitted from the heat source 110 and transmitted toward the upper frame 11, to the direction of the lower frame 13, that is, the direction in which the cooking object is located. The heat emitted from the heat source 110 may be transmitted to the inside of the cooking chamber 10 by the reflector 130 without being discharged to the outside through the upper frame 11. In addition, since the cooking object to be cooked in the cooking chamber 10 may be heated by the radiation heat emitted from the heat source 110 and the heat reflected by the reflector 130, the heat efficiency of the cooking appliance 1 may be improved, and the cooking time may be relatively shortened.

Hereinafter, an example of the outer shape of the reflector 130 will be described in more detail.

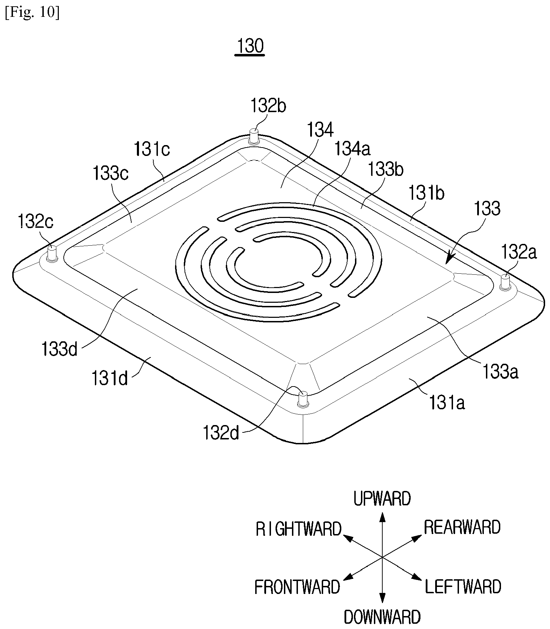

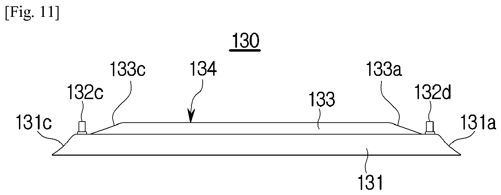

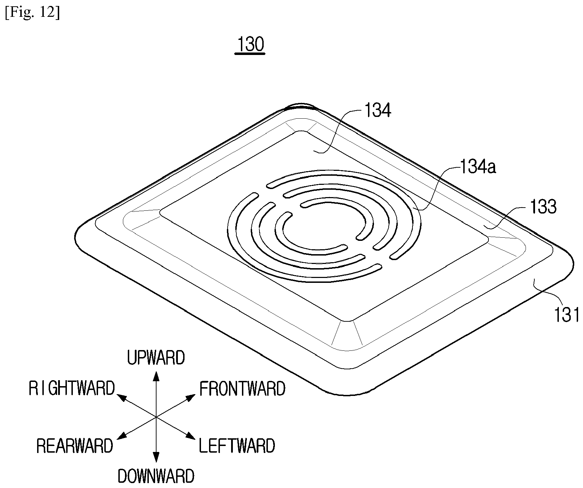

FIG. 10 is a perspective view illustrating a reflector according to an embodiment, FIG. 11 is a front view illustrating the reflector according to an embodiment, and FIG. 12 is a bottom view illustrating the reflector according to an embodiment.

As shown in FIGS. 10 to 12, the reflector 130 may include an upwardly recessed portion. Particularly, the reflector 130 may include a boundary portion 131, a reflector fixing portion 132, a connection portion 133, and a center portion 134.

The boundary portion 131 may be formed along the boundary of the reflector 130. The boundary portion 131 may include first to fourth boundary portions 131a to 131d formed along the boundary of the reflector 130 and each of the first to fourth boundary portions 131a to 131d may be formed to be inclined downward with respect to the center portion 134. In this case, the angle between the normal of each surface of the first to fourth boundary portions 131a to 131d and the normal of one surface of the central portion 134 may be an acute angle smaller than 90 degrees. Therefore, the outer boundary portions of the first to fourth boundary portions 131a to 131d may be positioned relatively downward relative to other portions. Since the boundary portion 131 may be formed in this way, the heat incident in the boundary direction of the reflector 130 may be reflected toward the cooking chamber 10. In addition, the first to fourth boundary portions 131a to 131d may be inclined downward, so that the reflector fixing portion 132 may be more tightly fixed to the inside of the upper frame 11.

The reflector fixing portion 132 may extend from the boundary portion 131 and be parallel to the center portion 134 or be inclined at a certain angle with the center portion 134. According to the embodiment, coupling projections 132a to 132d for fixing the reflector 130 to the inside of the upper frame 11 may be formed on the upper surface of the reflector fixing portion 132. The reflector 130 may be heated by heat emitted from the heat source 110. Accordingly, the fastening portion for fixing the reflector 130 to the upper frame 11 is damaged by the heat, and thus the fixation between the reflector 130 and the upper frame 11 may be loosened. When the coupling protrusions 132a to 132d are installed directly on the reflector 130, it may be possible to prevent the fixing between the reflector 130 and the upper frame 11 from loosening. According to another embodiment, the reflector fixing portion 132 may be formed with a coupling groove (not shown) into which a screw, a pin or the like may be inserted. In addition, the reflector fixing portion 132 may be provided with various means that can be considered by the designer and that allows the reflector 130 to be coupled and fixed to the upper frame 11.

The connection portion 133 may include first to fourth connection portions 133a to 133c extending from the reflector fixing portion 132 and being formed along the boundary of the center portion 134. Each of the first to fourth connection portions 133a to 133c may be formed to be inclined with respect to the central portion 134. In this case, the degree of inclination of each of the first to fourth connecting portions 133a to 133c may be equal to or slightly different from the degree of inclination of each of the first to fourth boundary portions 131a to 131d. According to the embodiment, the inclination degree of each of the first to fourth connecting portions 133a to 133c and the degree of inclination of each of the first to fourth boundary portions 131a to 131d may be different from each other. Each of the first to fourth connection portions 133a to 133c may be inclined so that some of the heat incident on the reflector 130 can be reflected toward the center of the cooking chamber 10.

The center portion 134 may be formed at the center of the reflector 130 and may have the shape of a flat plate. The center portion 134 may extend from the connection portion 133. The center portion 134 may have a shape of a flat plate, wherein the flat plate may be provided so as to be parallel to the lower frame 13 when the reflector 130 is provided on the upper frame 11. In the central portion 134, a predetermined figure pattern 134a may be formed according to the embodiment. The predetermined figure pattern 134a may be determined arbitrarily according to the designer's selection, and may be provided corresponding to the shape of the heat source 110. In addition, the predetermined figure pattern 134a may have a shape such that the incident heat may be reflected in various directions. The predetermined figure pattern 134a may be formed in an engraved manner at the center portion 134 and/or in an embossed manner when viewed from above.

The reflector 130 may be made of carbon steel or may be made of an aluminum material or an aluminum alloy material having a relatively higher reflectance and corrosion resistance than a steel material. When the reflector 130 is implemented using an aluminum material or an aluminum alloy material, even when heat of the same energy is emitted from the heat source 110, the temperature inside the cooking chamber 10 may be relatively higher than that of the case using the carbon steel. According to the embodiment, a pigment or a material for increasing the reflection efficiency of the reflector 130 may be further formed on one surface of the lower surface of the boundary portion 131, the reflector fixing portion 132, the connection portion 133 and the center portion 134 of the reflector 130 by a method of application or attachment.

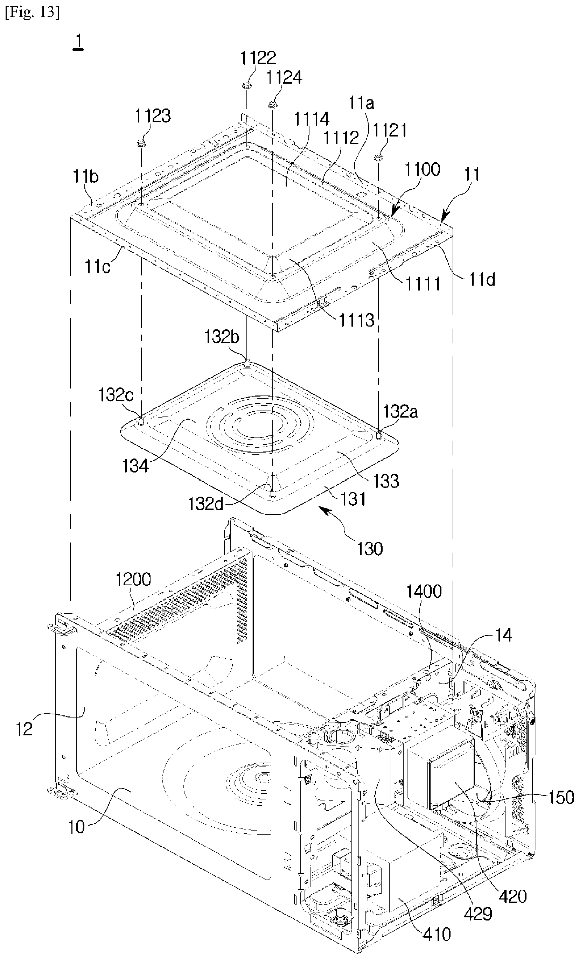

FIG. 13 is a view illustrating an example in which the reflector is coupled to the upper frame.

As shown in FIG. 13, the reflector 130 may be installed on one side of the upper frame 11 in the direction of the cooking chamber 10. Particularly, in the upper frame 11, coupling surfaces 1111 to 1114 having a shape corresponding to the shape of the reflector 130 may be formed. When the reflector 130 is fixed to the upper frame 11, the boundary portion 131, the reflector fixing portion 132, the connecting portion 133, and the central portion 134 of the reflector 130 may be respectively fixed to the coupling surfaces 1111 to 1114 of the upper frame 11. Therefore, the shape of the reflector 130 and the shape of the upper frame 11 may be provided to correspond to each other. In this case, depending on the shape of the upper frame 11, the reflector 130 may have a predetermined shape, or the upper frame 11 may have a predetermined shape depending on the shape of the reflector 130 have.

The upper frame may include insertion holes 1112a to 1112d allowing the coupling protrusions 132a to 132d of the reflector 130 to be inserted therethrough and being disposed at positions corresponding to positions where the coupling protrusions 132a to 132d are formed on the reflector 130. The coupling protrusions 132a to 132d of the reflector 130 may penetrate through the insertion holes 1112a to 1112d, respectively. The fastening devices such as the nuts 1121 to 1124 may be coupled to the coupling protrusions 132a to 132d penetrating the insertion holes 1112a to 1112d to fix the reflector 130 to the upper frame 11.

As shown in FIG. 13, the reflector 130 may be assembled and fixed to the upper frame 11 and the upper frame 11 may be coupled to other frames within the external housing 20, by being fixed in contact with engaging surfaces 11a to 11d formed along the outer perimeter of the upper frame 11, the front frame 24 and the rear frame of the external housing 20, the engaging surface 1200 formed on the first side frame 12 of the cooking chamber 10, and the engaging surface 1400 formed on the second side frame 14.

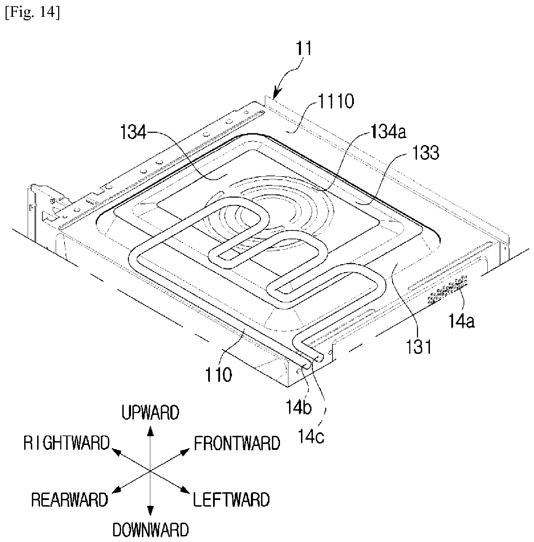

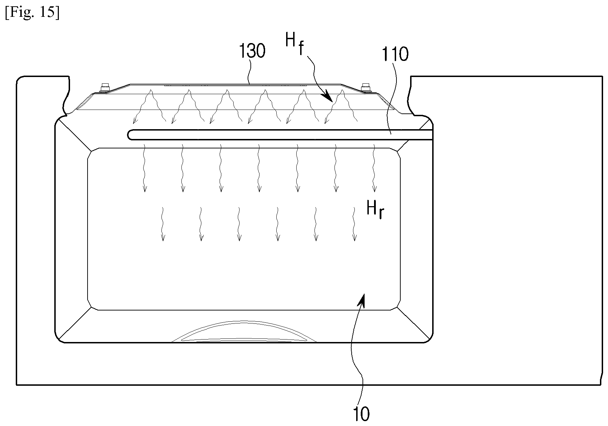

FIG. 14 is a first view illustrating an example in which the heat source and the reflector are disposed, and FIG. 15 is a second view illustrating an example in which the heat source and the reflector are disposed.

Referring to FIGS 14 and 15, the heat source 110 may be coupled to the heat source insertion holes 14b and 14c and the heat source 110 may be installed between the cooking space of the cooking chamber 10 and the reflector 130. The heat source 110 may be disposed on the inner side of the outer boundary line of the reflector 130. The heat source 110 may be formed to have a relatively smaller size than the reflector 130 so that the heat source 110 may be disposed inside the outer boundary line of the reflector 130. When heat is emitted from the heat source 110, a part of the heat Hr emitted from the heat source 110 may be discharged downward and the other part may be transferred to the reflector 130, that is, the light is reflected by the boundary portion 131, the reflector fixing portion 132, the connecting portion 133 and the central portion 134, and transferred to downward (Hf). Accordingly, the cooking object to be cooked in the cooking chamber 10 may be heated and cooked by the heat radiated directly from the heat source 110 and the heat reflected by the reflector 130.

Hereinafter, the electronic component chamber 50 will be described.

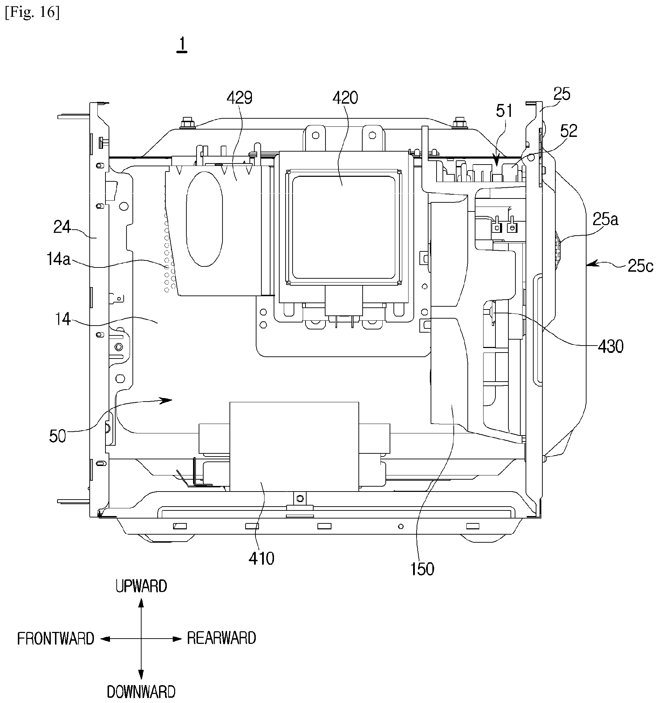

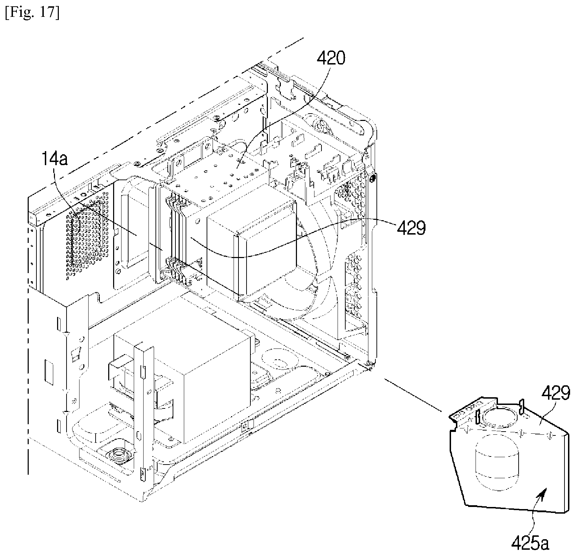

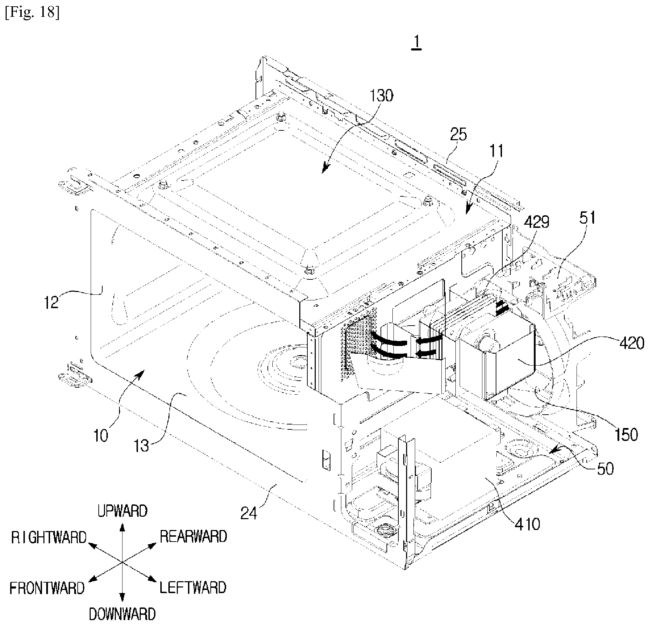

FIG. 16 is a side view illustrating an electronic component chamber according to an embodiment, FIG. 17 is a view illustrating an example in which air introduced by a fan is transferred to the cooking chamber, and FIG. 18 is a view illustrating an example of a duct connecting the electronic component chamber and the cooking chamber.

Referring to FIGS 5, 13 and 16, the electronic component chamber 50 may be provided on the side surface of the cooking chamber 10. For example, the electronic component chamber 50 may be provided on the rear surface of the user interface panel 20.

The fan 150, the power supply 410, a microwave emitter 420, and a duct 429 may be installed in the electronic component chamber 50.

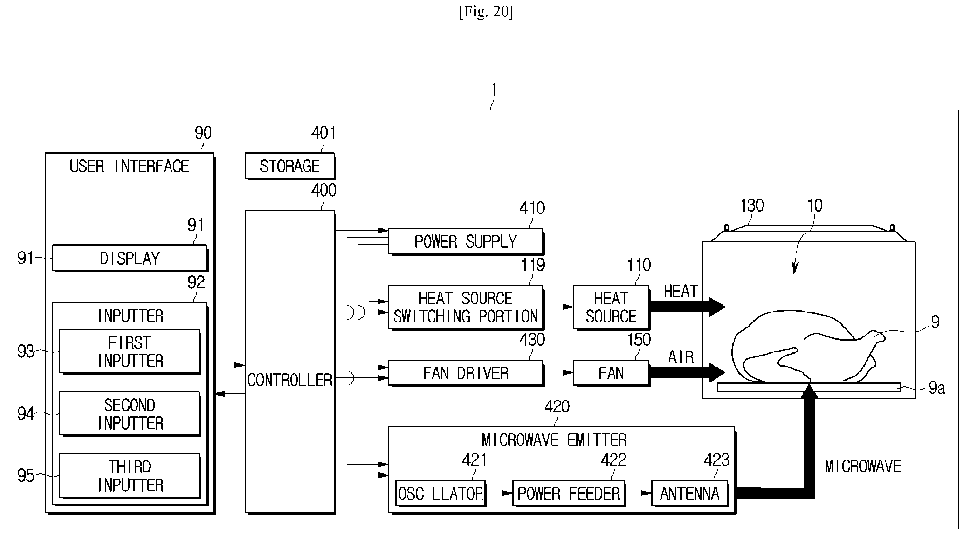

The fan 150 may be provided to rotate in at least one direction in accordance with the operation of a fan driver (430 in FIG. 20) such as a motor, more particularly, the air is forced to flow into the interior of the cooking apparatus 1 such as into the electronic component chamber 50. The fan 150 may be controlled to perform the rotation operation for a predetermined period of time to allow the external air to be introduced into the electronic component camber 50 and then to stop the operation for a predetermined period of time. More particularly, for example, the fan 150 may be turned on/off in a predetermined pattern to forcibly introduce air into the cooking apparatus 1 or stop the forced introduction of air. The air introduced by the fan 150 may be delivered into the cooking chamber 10. Details related to the operation of the fan 150 will be described later.

The power supply 410 may be electrically connected to various components in the cooking apparatus 1, such as the heat source 110, the fan 150, the microwave emitter 420, to the power supply to various components in the cooking apparatus 1. The power supply 410 may be electrically connected to or disconnected from various components in the cooking apparatus 1 according to the control of a controller 400, and thus the various components in the cooking apparatus 1 may be operated under the control of the controller 400.

The microwave emitter 420 may generate a microwave of a predetermined frequency and emit the generated microwave. The microwave generated in the microwave emitter 420 may be reflected inside the duct 429 and transferred into the cooking chamber 10 through the inlet hole 14a. Accordingly, the cooking object inside the cooking chamber 10 may be heated by the microwave. When the cooking apparatus 1 performs a cooking operation, the microwave emitter 420 may or may not operate, as needed. The microwave emitter 420 may be heated to a high temperature when performing the microwave generating operation. In this case, the air forced into the cooking apparatus 1 by the fan 150 may cool the microwave emitter 420 while passing through the microwave emitter 420. Particularly, referring to FIG. 17, the air forced by the fan 150 may be introduced from one side of the microwave emitter 420 and then pass through the microwave emitter 420 to be supplied to the microwave emitter 420, and thus it is possible to cool various components 429 in the microwave emitter 420 while being discharged to the other side. The air that has passed through the microwave emitter 420 may move into the duct 429.

Referring to FIGS. 17 and 18, the duct 429 may guide the air forced by the fan 150 and/or the microwave generated by the microwave emitter 420 into the cooking chamber 10. In the embodiment, the duct 429 may be fixed to the first side frame 14 and formed on one side of the microwave emitter 420. The duct 429 may have the shape of a triangular pillar formed with an upper surface and a lower triangle, and a frame may be formed on one side of the triangle forming an upper side, a lower side, and a hypotenuse of the triangle, and the other two sides may be opened. The two open sides form one end and the other end of the duct 429. One end of the duct 429 may face the microwave emitter 420 and the other end thereof may face the first side frame 14. In this case, the other end of the duct 429 may be provided in a portion where the inlet hole 14a of the first side frame 14 may be formed.

The air forcedly introduced by the fan 150 and/or the microwave generated by the microwave emitter 420 may flow into the duct 429 through one end of the duct 429 as shown in FIG. 17, and may be reflected on a frame provided on one side of the hypotenuse triangle to move to the other end of the duct 429. Forced inflow air to the other end of the duct 429 and/or the microwave generated by the microwave emitter 420 may be moved to the inner space of the cooking chamber 10 through the inlet hole 14a of the first side frame 14.

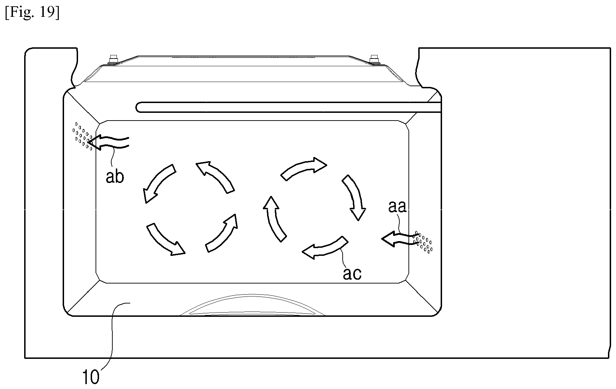

FIG. 19 is a view illustrating an example of the flow of air introduced into the cooking chamber.

As shown in FIG. 17, air forced into the cooking apparatus 1 by the fan 150 may air-cool the microwave emitter 420 and be supplied to the cooking chamber 10 through the duct 429 and the inlet hole 14a formed in the first side frame 14. The air (aa) transferred into the cooking chamber 10 may flow inside the cooking chamber 10 and be discharged to the outside of the cooking chamber 10 through the discharge hole 12a formed in the second side frame 12 (ab). The air may be discharged to the outside of the cooking apparatus 1 through a discharge port (not shown) formed on the rear frame 25 of the external housing 20.

The air (aa) transferred into the cooking chamber 10 may be convectively moved inside the cooking chamber 10. Particularly, when heat is generated in the heat source 110, the air transferred into the cooking chamber 10 may be moved upward and downward in the cooking chamber 10 by the heat inside the cooking chamber 10 (Ac). As the air flows, the heat may move and cook the cooking object. Meanwhile, this flow of air may prevent the radiant heat generated from the heat source 110 from being directly transferred to the cooking object placed on the lower frame 13, and accordingly, the radiant heat generated by the heat source 110 may relatively less reach the cooking object than when the air flow is absent.

Hereinafter, the operation of the above-described cooking apparatus will be described with reference to FIGS. 20 to 26B.

FIG. 20 is a control block diagram illustrating the control flow of the cooking apparatus.

Referring to FIG. 20, the cooking apparatus 1 may include the cooking chamber 10, the heat source 110, the fan 150, the user interface 90, the heat source switching portion 119, the controller 400, a storage 401, the power supply 410 and the fan driver 430 and may further include a microwave emitter 420 as needed.

The cooking chamber 10 may be provided so that the cooking object 9 can be inserted and mounted. On one side of the cooking chamber 10, such as , on the upper side of the cooking chamber 10, a reflector 130, which is configured to reflect heat, which is a part of heat emitted from the heat source 110, flows in a direction opposite to a direction in which the cooking object 9 is positioned, to the direction in which the cooking object 9 is positioned is provided. A rotating plate 9a in which the cooking object 9 to be cooked is placed, rotated at a predetermined angular velocity in at least one direction may be provided in the cooking chamber 10 and the cooking object 9 may be rotated and cooked according to the rotation of the rotating plate 9a.

The user interface 90 may be provided to receive a user command from the user or to provide various pieces of information to the user. The user interface 90 may include the display 91 configured to provide various pieces of information to the user as visual images, and the inputter 92 configured to output an electrical signal corresponding to user's operating and receive the user command. In addition, the user interface 90 may further include a sound output device (not shown) or a lighting device (not shown).

The inputter 92 may include the first inputter 93, the second inputter 94 and the third inputter 95. The first inputter 93 may be designed to receive a user command for the start and/or finish of cooking performed while the fan 150 is alternated, and the second inputter 94 may be designed to receive a user command for additional cooking. When the second inputter 94 is operated, the cooking for the cooking object 9 may be additionally performed while the fan 150 is alternated. The third inputter 95 may be designed to receive various user commands for operations other then operations performed by the first inputter 93 and the second inputter 94. The inputter 92 may output an electrical signal according to a user's operation and the electrical signal outputted from the inputter 92 may be transmitted to the controller 400 through a circuit or a wire provided in the cooking apparatus 1.

The controller 400 may generate a control signal corresponding to the electrical signal in response to the transmission of the electrical signal transmitted from the inputter 92, and transmit the generated control signal to the heat source switching portion 119 and the fan driver 430. As needed, the controller 400 may transmit a control signal to the power supply 410 that supplies power to the heat source switching portion 119 and the fan driver 430 instead of the heat source switching portion 119 and the fan driver 430, and may control the heat source switching portion 119 and the fan driver 430.

In addition, the controller 400 may transmit a control signal to the microwave emitter 420 to allow the microwave emitter 420 to radiate the microwave into the cooking chamber 10. The controller 400 also may transmit control signals to at least one of the display 91, the sound output device or the lighting device of the user interface 90 so that at least one of the displays 91, the sound output device or the lighting device of the user interface 90, output information related to the operation of the cooking apparatus 1 to the user.

The controller 400 may be implemented using at least one semiconductor and associated components embedded in the cooking apparatus 1. The controller 400 may be implemented using, such as, a microcomputer, a central processing unit (CPU), a microcontroller unit (MCU), or the like.

The storage 401 may be provided so as to be capable of communicating with the controller 400 through a circuit or a wire, and may temporarily or non-temporarily store various data necessary for the operation of the controller 400. The storage 401 may store various information about a graphic user interface (GUI) displayed on the display 91 or various other images. For example, the storage 401 may store various information related to the alternation of the fans, information on the temperature of the heat source 110, and the like. More particularly, for example, the storage 401 may store information about the time at which the operation of the fan is started, the time at which the operation of the fan is finished, the time at which the operation of the fan is restarted, and the like, and may store the count values for measuring the times.

The storage 401 may include a main storage device and/or an auxiliary storage device, and the main storage device may be implemented using various types of storage media such as ROM or RAM. The ROM may include an EPROM, an EEPROM, or a MASK ROM, and the RAM may include a DRAM or an SRAM), and the like. The auxiliary storage device may be a solid state drive (SSD) for storing information using semiconductors, a hard disk drive (HDD) for storing information using a magnetic disk, a compact disk, a laser But may also be implemented using various storage media capable of storing information such as disks, magnetic tapes, magneto-optical disks, or floppy disks.

The power supply 410 may be provided to supply the necessary power to various components in the cooking apparatus 1. For example, the power supply 410 may supply power to the heat source switching portion 119 and the fan driver 430 such that the heat source switching portion 119 allows the heat source 110 to generate heat, the driver 430 allows the fan 150 to rotate or stop rotating. The power supply 410 may be provided to receive the commercial power from the outside and convert the supplied commercial power into a form suitable for the cooking apparatus 1. According to the embodiment, the power supply 410 may be embodied in the cooking apparatus 1 and implemented using a battery.

The heat source switching portion 119 may be connected to the power supply 410 and the heat source 110, and may allow the heat source 110 to emit heat under the control of the controller 400 or prevent the heat source 110 from emitting heat under the control of the controller 400, by transmitting the electric energy generated from the power supply 410 to the heat source 110 or blocking the transmission of the electric energy.

The heat source 110 may convert the electrical energy provided by the power supply 140 into thermal energy to generate heat. Heat generated in the heat source 110 may be supplied into the cooking chamber 10. As described above, some of the heat generated from the heat source 110 may be directly transferred to the cooking object 9 inside the cooking chamber 10, while others may be reflected by the reflector 130 and then transmitted to the cooking object 9.

The fan driver 430 may be provided so as not to rotate or rotate the fan 150 under the control of the controller 400. The fan driver 430 may be implemented using a motor coupled to the center of rotation of the fan 150. According to the embodiment, the fan driver 430 may operate the fan 150 in a predetermined pattern according to control of the controller 400, and more particularly, the fan 150 may be rotated during an operating period and not rotated during another stop period. Such operation and stop of the fan 150 may be set to be repeated periodically. This will be described below.

The fan 150 may introduce external air into the cooking apparatus 1 as it rotates. The introduced air may be transferred into the cooking chamber 10 as described above. In this case, the air introduced by the fan 150 may be passed through the microwave emitter 420 installed in the electronic component chamber 50 to air-cool the microwave emitter 420 and then transferred to the cooking chamber 10 as described above.

The microwave emitter 420 may generate microwaves and emit them into the cooking chamber 10. The microwave emitter 420 may include an oscillator 421, a power feeder 422, and an antenna 423 as shown in FIG 20. The oscillator 421 may receive power from the power supply 140, generate AC power of a predetermined frequency according to the supplied power, and may transmit the generated AC power to the power feeder 422. The oscillator 421 may be implemented as one or more semiconductor chips and associated components. An amplifier for amplifying power may be further provided between the oscillator 421 and the power feeder 422 as needed. The power feeder 422 may feed microwave power to the antenna 423. The power feeder 422 may be implemented using a variety of feed devices designed to supply the output power to the antenna 423. The antenna 423 may radiate the microwave of the corresponding frequency to the cooking space inside the cooking chamber 10 according to the microwave power fed from the power feeder 422. The antenna 423 may be implemented using various types of antennas commonly used to generate microwaves. The microwave emitter 420 may cook the cooking object 9 by heating the cooking object 9 inside the cooking chamber 10 by the microwave.

Hereinafter, the operation and control flow of the cooking apparatus described above will be described in more detail.

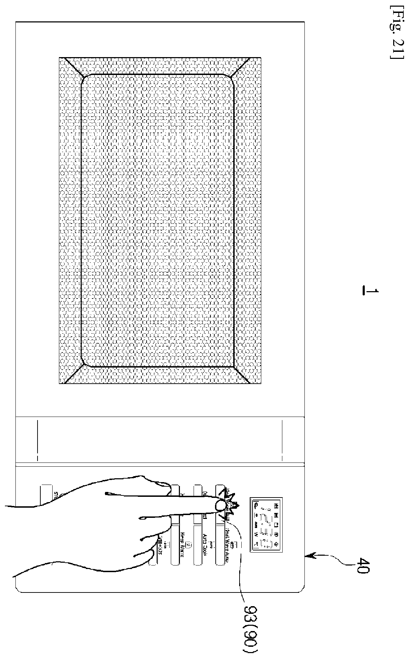

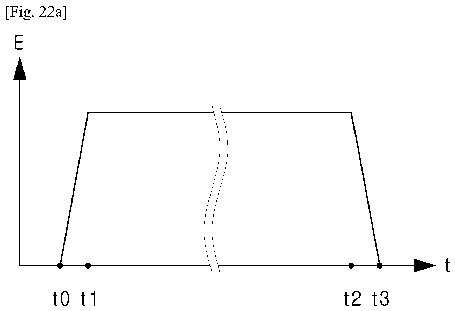

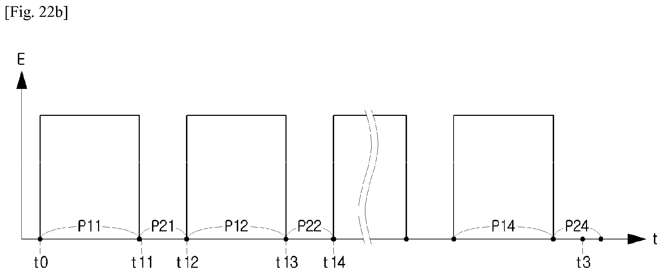

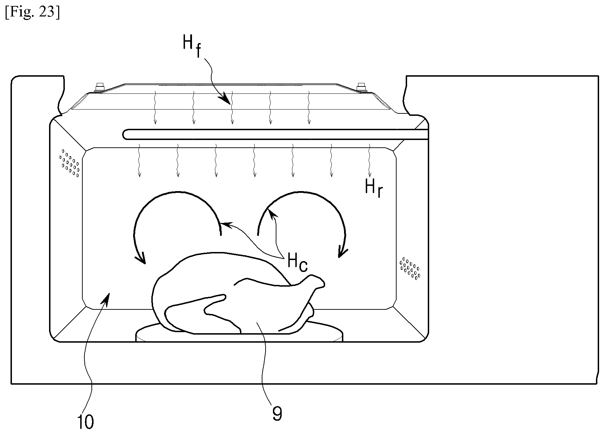

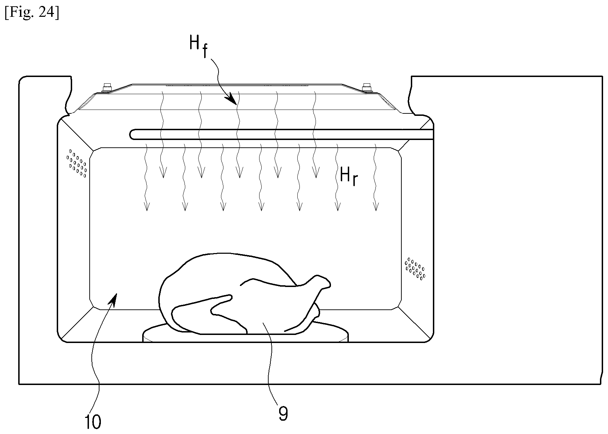

FIG. 21 is a view illustrating an example in which a first inputter is operated. FIGS. 22A and 22B are graphs illustrating an example of the operation of the heat source and the fan according to the operation of the first inputter. The x-axis in FIG. 22A means time and the y-axis means the magnitude of the thermal energy . The x-axis in FIG. 22B means time, and the y-axis means the rotation speed of the fan. FIG. 23 is a view illustrating the movement of the heat inside the cooking chamber when the air is introduced. FIG. 24 is a view illustrating the movement of the heat inside the cooking chamber when the introduction of air is stopped.

The user can operate the first inputter 93 as shown in FIG. 21. As needed, the user may input more information about the type and amount of the cooking object 9, or may input the desired cooking period.

As shown in FIG. 22A, the controller 400 may generate a control signal in accordance with the operation of the first inputter 93 by the user and may transmit the generated control signal to the heat source driver 420 to open the heat source driver 420, so that heat source 110 may be supplied with power. Particularly, when power is supplied to the heat source 110 at the initial time t0 according to the control of the controller 400, the temperature of the heat source 110 may gradually increase and may rise to a temperature corresponding to the supplied power. In this case, the temperature of the heat source 110 may be maintained at a constant level from the first time t1 after continuously rising until the first time t1. Accordingly, heat is generated in the heat source 110, and the generated heat may be directly transmitted to the cooking object 9 or reflected by the reflector 130 and then transmitted to the cooking object 9.

The controller 400 may calculate the time required for cooking based on the information on the type and amount of the cooking object 9, or may determine the period required for cooking, that is, the cooking setting period (t2-t0) by reading and acquiring from the storage 401.

The controller 400 may determine the cooking finish time (t2) based on the cooking setting period inputted by the user or determined by the controller 400. When the cooking finish time (t2) is expired, a control signal may be transmitted to the heat source driver 420 to close the heat source driver 420. Accordingly, the supply of power to the heat source 110 may be cut off, and the temperature of the heat source 110 may be reduced. In other words, heat may be not generated in the heat source 110, and the cooking may be finished.

When the cooking operation of the cooking apparatus 1 is started and the heat source 110 starts to emit heat, the controller 400 may determine whether or not the period in which the cooking has been performed exceeds the cooking setting period (t2-t0), and determine whether to finish the cooking.. In this case, the controller 400 may measure the period in which the cooking is performed using various methods. For example, the controller 400 may increase the count value by increasing the time using a clock embedded in the controller 400 itself or provided separately from the controller 400, and may measure the time period performed. In addition, the controller 400 may measure the period in which the cooking is performed by using various methods that the designer may consider.

The controller 400 may also control the fan 150 to rotate by transmitting a control signal to the fan driver 430 according to the operation of the first inputter 93 as shown in FIG. 22B. In this case, the controller 400 may generate a control signal to operate the fan 150 alternately, and may transmit the control signal to the fan driver 430. Accordingly, the fan 150 may rotate and operate during the specific periods (p11, p12, and p13) and stop the operation during the periods (p21, p22, and p23) between the specific periods (p11, p12, and p13). Hereinafter, the periods (p11, p12, and p13) in which the fan 150 operates are referred to as operation periods of the fan, and the periods (p21, p22, and p23) in which the fan 150 does not operate are referred to as fan stop periods.

In the operation periods (p11, p12 and p13) of the fan, the air outside the cooking apparatus 1 is forcibly introduced into the cooking apparatus 1 according to the operation of the fan 150. The air introduced into the cooking apparatus 1 may cool components such as the microwave emitter 420 inside the electronic component chamber 50 as shown in FIG. 18, and move to the cooking chamber 10 through the duct 429 and the inlet hole 14a. The air introduced into the cooking chamber 10 as described above may be heated by the heat discharged from the heat source 110 or by the heat reflected by the reflector 130 (Hr and Hf), and the heated air may be convectively flowed in the cooking chamber 10, as shown in FIG. 23. In other words, the heat emitted from the heat source 110 may be convectively flowed inside the cooking chamber 10, and the cooking object 9 may be cooked by the convection heat (Hc). In this case, by the obstruction of the flowing air, the heats (Hr and Hf) emitted from the heat source 110 may be relatively less directly radiated to the cooking object 9 than a case of the absence of air flow.

In the stop periods (p21, p22 and p23) of the fan, the operation of the fan 150 may be finished, and external air may be not forcibly introduced into the cooking apparatus 1 according to the finish of the operation of the fan 150. Accordingly, the flow of air inside the cooking chamber 10 may be reduced, and the convection heat inside the cooking chamber 10 may be reduced or hardly generated, as shown in FIG. 24. In this case, the heats (Hr and Hf) emitted from the heat source 110 may be radiated directly to the cooking object 9 relatively more than when air flow is present, thus the cooking object 9 may be directly heated and cooked by radiant heats (Hr and Hf).

The operation periods (p11, p12 and p 13) of the fan and the stop periods (p21, p22 and p23) of the fan may be provided so as to alternate each other as shown in FIG. 22B. Particularly, when the operation period (p11) of one fan is finished, the stop period (p21) of one fan may start, and when the stop period (p21) of one fan is finished, the operation period (p12) of another fan may start. In other words, while the cooking apparatus 1 is performing the cooking, the fan 150 may repeat the operation and the stop.

The lengths (t11-t0 and t13-t12) of the operation periods (p11, p12 and p13) of the fan, and the lengths (t12-t11 and t14-t13) of the stop periods (p21, p22) of the fan, may be preset by the designer. The lengths of the operation periods (p11, p12, and p13) of the fan and the periods (p21, p22, and p23) of the fan may be changed according to the user's selection, as needed.

The lengths (t11-t0, t13-t12) of the operation periods (p11, p12 and p13) of the fan, and the lengths (t12-t11 and t14-t13) of the stop periods (p21, p22 and p23) of the fan, may be the same or may be different from one another. When the lengths (t11-t0 and t13-t12) of the operation periods (p11, p12 and p13) of the fan and the lengths (t12-t11 and t14-t13) of the fan stop periods (p21, p22 and p23) are different from each other , the lengths (t11-t0 and t13-t12) of the operation periods (p11, p12 and p13) of the fan may be set to be relatively longer than the lengths (t12-t11 and t14-t13) of the stop periods (p21, p22 and p23) of the fan. For example, the lengths (t11-t0 and t13-t12) of the operation periods (p11, p12 and p13) of the fan may be set to about 30 seconds and the length (t12-t11, t14-t13) of the stop periods (p21, p22 and p23) of the fan may be set to approximately 5 seconds or less.

The lengths (t11-t0 and t13-t12) of the operation periods (p11, p12, and p13) of the respective fans may be the same, some of them may be the same, some of them may be different, or all of them may be different from each other. Similarly, the lengths (t12-t11 and t14-t13) of the stop periods (p21, p22, and p23) of the respective fans may be the same, some of them may be the same, some of them may be different, or all of them may be different from each other.

When the lengths (t11-t0, t13-t12) of the operation periods (p11, p12 and p13) of the fan are set to be long, the period in which the radiant heat emitted from the heat source is directly transferred to the cooking object may be relatively shortened. When the lengths (t12-t11 and t14-t13) of the stop periods (p21, p22 and p23) of the fan are set too long, cooling of the electronic component provided in the electronic component chamber 50 may be not sufficiently performed, which may induce malfunction, failure and defect of cooking apparatus 1. Therefore, the lengths (t11-t0and t13-t12) of the operation periods (p11, p12 and p13) of the fan and the lengths (t12-t11 and t14-t13) of the stop period (p21) of the fan may be suitably set according to designer and/or the user's selection.

The controller 400 may measure the operation periods (p 11, p 12 and p13) of the fan and the stop periods (p21, p22 and p23) of the fan through various methods, and may determine whether or not the operation periods (p11, p12 and p13) of the fan and the stop periods (p21, p22 and p23) of the fan have elapsed. For example, the controller 400 may increase the count value in accordance with an increase in time by using a clock provided in the controller 400 itself or separately provided from the controller 400, and may measure the operation periods (p11, p12 and p13) of the fan and the stop periods (p21, p22 and p23) of the fan.

Particularly, the controller 400 may periodically increase the count value when the fan 150 starts operating at the initial time t0. The controller 400 may determine that it is time for the stop period (p21) of the fan, generate a control signal, and output the control signal to the fan driver 430 when the increased count value exceeds the preset first setting periods (t11-t0 and t13-13). In response to the control signal, the fan driver 430 may stop the operation of the fan 150. In this case, the controller 400 may reset and initialize the count value for measurement of the operation periods (p12 and p13) of the next fan or the stop periods (p21, p22 and p23) of the fan. The first setting period (t11-t0) may be a period set corresponding to the operation periods (p11, p12, and p 13) of the fan, and may be determined according to the designer and/or user's selection.

Similarly, when the operation of the fan 150 is stopped at a specific time point t11, the controller 400 may periodically increase the count value. When the increased count value exceeds the predetermined second setting period (t12-t11), the controller 400 may determine that it is time for the operation period (p12) of the fan, generate a control signal, and may transmit to the fan driver 430. In response to the control signal, the fan driver 430 may restart operation of the fan 150. The second setting period (t12-t11) is a period set in correspondence with the stop period (p21) of the fan, and may be determined according to the designer and/or user's selection.

The operation and the stop operation of the fan 150 may be repeatedly performed alternately until the cooking finish time (t2) as shown in FIG. 22B. As shown in FIGS. 22A and 22B, since the operation and stop of the fan 150 are alternately performed during the continuous discharge at the heat source 110, the specific gravity of the convection heat and the radiant heat are applied to the cooking object 9 inside the cooking chamber 10 while changing each other. As a result, the cooking efficiency of the cooking object 9 may be improved. That is, since the radiant heat is delivered directly to the cooking object 9 at a constant cycle, the cooking object 9 may be more effectively cooked than when it is cooked with only convection heat. In addition, air may also flow into the electronic component chamber 50 while the fan 150 is rotating, and thus various components of the electronic component chamber 50 may be properly cooled.

At the cooking finish time t2 determined according to the cooking setting period , the operation of the heat source 110 and the fan 150 may be finished as described above, and the cooking apparatus 1 may complete the cooking.

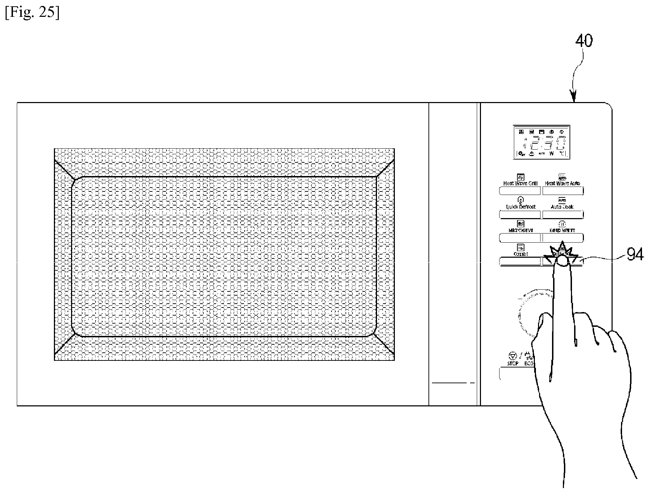

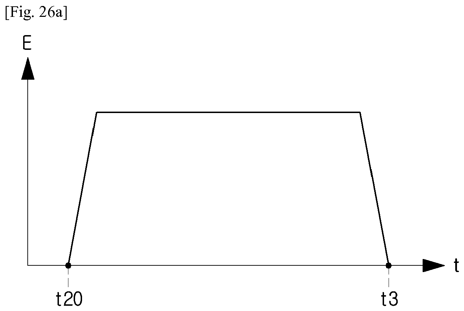

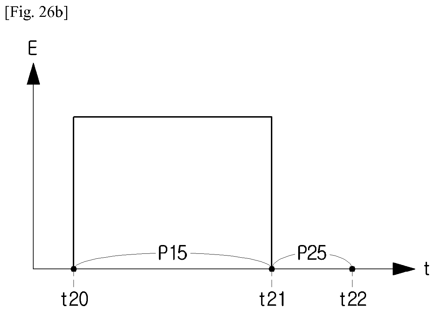

FIG. 25 is a view illustrating an example in which a second inputter is operated. FIGS. 26A and 26B are graphs illustrating an example of the operation of the heat source and the fan according to the operation of the second inputter. The x-axis in FIG. 26A means time and the y-axis means the magnitude of the thermal energy . The x-axis in FIG. 26B means time, and the y-axis means the rotation speed of the fan.

After the cooking is completed as described above, as shown in FIG. 25, the user may operate the second inputter 94 so that the cooking apparatus 1 further performs the cooking operation. For example, when the user wishes to further cook the cooking object 9 cooked by the cooking apparatus 1, the user may manipulate the second inputter 94 to allow the cooking apparatus 1 to perform further cooking during an additional cooking time. The additional cooking time may be determined by the designer. For example, the additional cooking time may be about 30 seconds or so. Depending on the designer's selection, the additional cooking time may be configured to be adjusted by a user or configured to be not adjusted by a user..

When the second inputter 94 is operated by the user, the second inputter 94 may output an electric signal to the controller 400, and the controller 400 may generate a control signal according to the first inputter 93 operation to the user as shown in FIG. 26A, the generated control signal may be transmitted to the heat source driver 420 so that the heat source driver 420 is opened to supply power to the heat source 110. As described above, the heat source 110 may start to heat at the initial time t0 and may continue to release heat until the finish time t3 of the additional cooking.

The controller 400 may determine whether the additional cooking period is finished by determining whether the additional cooking period exceeds the additional cooking setting period (t3-t0) when the additional cooking operation is started. The controller 400 may measure the period in which the cooking is performed, by using various methods as described above. For example, the controller 400 may increase the count value by increasing the time using a clock embedded in the controller 400 itself or provided separately from the controller 400, and may measure the time period performed. In addition, the controller 400 may measure the period in which the cooking is performed by using various methods that the designer may consider.

The controller 400 may also control the fan 150 to rotate or stop by transmitting a control signal to the fan driver 430 according to the operation of the second inputter 94 as shown in FIG. 26B . In this case, as described above, during the operation period p15 of the fan, the fan 150 may rotate to forcibly introduce the external air into the cooking apparatus 1, and during the stop period (p25) of the fan, the fan 150 may stop to prevent external air from being forcibly introduced into the apparatus 1.

In the same manner as described above, the controller 400 may measure the operation period (p15) of the fan and the stop period(p25) of the fan through various methods. For example, by increasing the count value using the clock, the controller 400 may measure the operation period (p15) of the fan and the stop period (p25) of the fan.

In this case, the controller 400 may compare the result of the count that was started according to the driving of the fan 150 with a preset third setting period (t21-t20), and may determine whether the operation period p15 of the fan has elapsed. Also, the controller 400 may compare the result of the count that was started according to the stopping of the fan 150 with a preset fourth setting period (t22-t21), and may determine whether the operation period (p15) of the fan has elapsed. The third setting period (t21-t20) and the fourth setting period (t22-t21) may be set corresponding to the operation period (p15) of the fan 150 and the stop period (p25) of the fan 150, respectively, and may be determined by the designer and/or the user's selection. The third setting period (t21-t20) may be the same as or different from the first setting periods (t11-t0 and t13-13). Further, the fourth setting period (t22-t21) may be the same as or different from the second setting period (t12-t11). The controller 400 may reset the count value when it is time for the operation period (p15) of the fan 150 and the stop period (p25) of the fan 150, respectively.

The operation and stop of the fan 150 shown in FIG. 26B may be repeated until the period in which the cooking operation is performed is the same as the additional cooking setting period. In other words, the fan 150 may alternately operate or stop until the finish time (t3) of the additional cooking.

At the finish time (t3) of the additional cooking determined according to the additional cooking setting period, the heat source 110 and the fan 150 may stop their operation and the additional cooking may be completed.

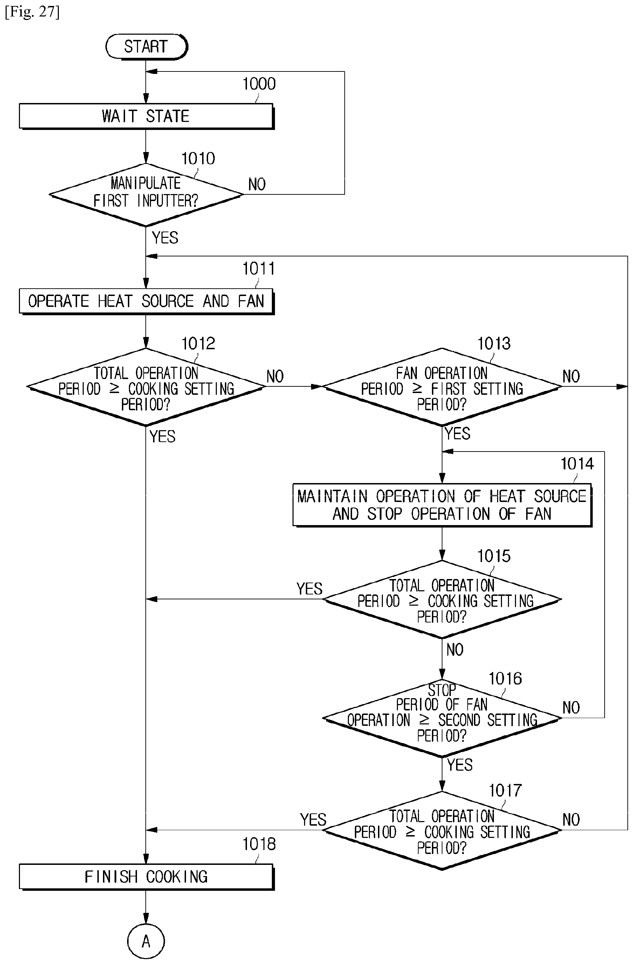

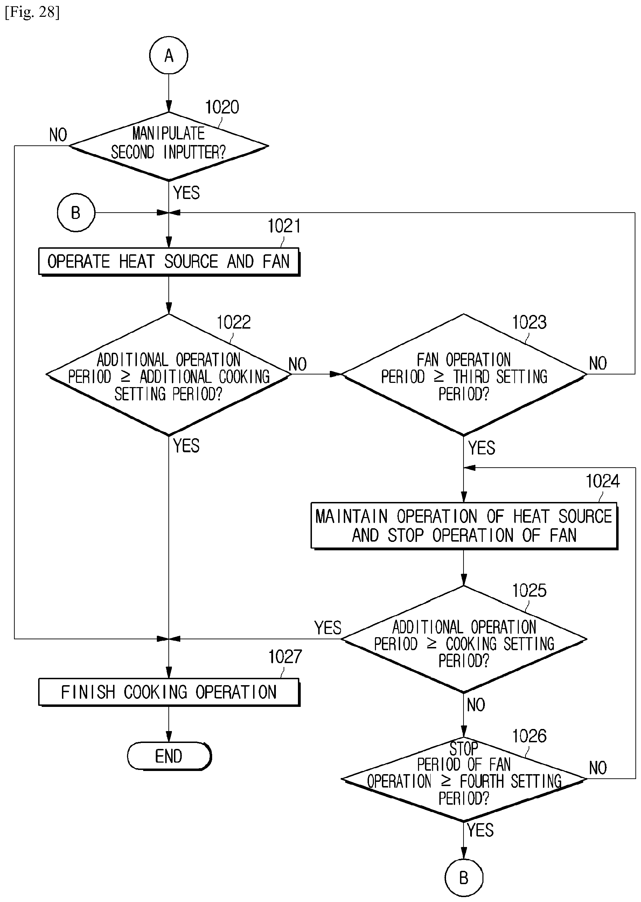

Hereinafter, the embodiment of the control method of the cooking apparatus will be described with reference to FIGS. 27 and 28.

FIG. 27 is a first flowchart illustrating a control method of the cooking apparatus according to an embodiment.

Referring to the embodiment of the control method of the cooking apparatus 1 shown in FIG. 27, the cooking apparatus 1 may ready until the user puts the cooking object into the cooking space inside the cooking apparatus 1 and operates the cooking apparatus 1 (1000). In this case, the cooking chamber 10 of the cooking apparatus 1 may be provided with a cooking space. For example, the cooking chamber 10 may be formed using a plurality of surfaces, in which one surface may be open and the other surfaces may be formed in the shape of a closed hexahedron. At least one surface of the other closed surface may be provided with the reflector 130, and at least one heat source 110 may be provided between the cooking space and the reflector 130. At least one surface may include an upper surface of the cooking chamber 10. Also, the cooking apparatus 1 may be provided with the fan 150 for introducing air into the cooking space.

When the user operates the first inputter provided in the user interface, which is provided to be directly installed in the cooking apparatus 1 or provided to communicate remotely with the cooking apparatus 1 (YES in 1010), the heat source 110 of the cooking apparatus 1 and the fan 150 may start to operate (1011). Depending on the embodiment, the fan 150 may start operation delayed with a certain time difference from the operation of the heat source 110. In this case, the cooking apparatus 1 may transmit a control signal related to the start of operation to the heat source switching portion 119 for supplying power to the heat source 110 and the fan driver 430 for rotating the fan 150, or power can be applied to them to make them operate.

The heat source 110 may emit heat of a predetermined temperature in response to the operation of the first inputter 93, and the heat emitted from the heat source 110 may be directly transferred to the cooking space, or reflected by the reflector 130 and transferred to the cooking space. In response to the operation of the first inputter 93, the fan 150 may rotate at a preset angular velocity and introduce the external air into the cooking apparatus 1. According to the embodiment, the air introduced into the cooking apparatus 1 by the fan 150 may be directly introduced into the cooking chamber 10, or may flow into the cooking chamber 10 after passing through the electronic component chamber 50. When the air introduced by the fan 150 passes through the electronic component chamber 50 and then move into the cooking chamber 10, the electronic component chamber 50 of the cooking apparatus 1 may be cooled by the air flowing into the cooking chamber 10. In other words, the fan 150 may forcedly air-cool the electronic component chamber 50 according to the operation. The air introduced into the cooking chamber 10 may flow inside the cooking chamber 10, and the heat from the heat source 110 may move convectively as the air flows. Therefore, the cooking object may be cooked by the radiant heat generated from the heat source 110 and the convection heat due to the air flow. In this case, the radiant heat may be transferred to the cooking object relatively less than when no convection occurs.

According to the embodiment, the cooking apparatus 1 may measure the operating period of the fan 150 when the fan starts operating. In this case, the operation time of the fan 150 may be measured by increasing the count value periodically at every predetermined time. As needed, the cooking apparatus 1 may measure the operation time of the fan 150 by using the clock provided in the controller 400. The count value for the operating period of the fan 150 may be set to be reset. For example, when the fan 150 stops operating, the count value for the operating period of the fan 150 may be set to be reset.

When the user operates an inputter other than the first inputter 93, the cooking apparatus 1 may perform the operation according to the manipulated inputter. When the user does not manipulate any inputter including the first inputter 93, the cooking apparatus 1 may continue to ready for the user's command input (NO in 1010).

According to the embodiment, the cooking apparatus 1 may operate during the cooking setting period, to perform cooking. In this case, the cooking setting period may be determined according to the user's arbitrary selection, or automatically determined according to the pre-programmed setting in the cooking apparatus 1. The cooking setting period may be variously determined depending on the type, quantity, volume, cooking method of the cooking object, and the like of the cooking object.

According to the embodiment, when the operation of the heat source 110 and the fan 150 is started and the cooking is thus started (1011), the cooking apparatus 1 may determine whether the measured operating period of the cooking apparatus 1 exceeds the cooking setting period (1012). When the duration of the operation of the cooking apparatus 1 exceeds the cooking setting period (YES in 1012), the cooking apparatus 1 may finish the cooking operation and may stop operation of both the heat source 110 and the fan 150 (1018). Particularly, the cooking apparatus 1 may stop the operation of both the heat source 110 and the fan 150 by transmitting the control signal for the operation stop to the heat source switching portion 119 and the fan driver 430, or by cutting off the power applied thereto.

On the other hand, when the period in which the cooking apparatus 1 is operated does not exceed the cooking setting period (NO in 1012), the cooking apparatus 1 may compare the operation period of the fan 150 with the first setting period (1013). The first setting period may be determined by the user or determined by the cooking apparatus 1. For example, the first setting period may be determined to be approximately 25 seconds.

When it is determined that the operation period of the fan 150 is shorter than the first setting period as a result of the comparison (NO in 1013), the fan 150 may maintain rotating operation and continuously introduce air into the cooking apparatus 1 from the outside (1011). On the other hand, the heat source 110 may continuously emit heat to the operation regardless of the result of the comparison determination.

When the operation period of the fan 150 is equal to or exceeds the first setting period (YES in 1013), the fan 150 may stop operating so that the external air is not introduced into the cooking apparatus 1 (1014). Therefore, air may be not introduced into the cooking chamber 10, and consequently, the convection of heat due to the flow of air in the cooking chamber 10 may be reduced or hardly occurred. On the other hand, the heat source 110 may continuously operate and emit heat in spite of the operation stop of the fan 150. The radiant heat emitted from the heat source 110 (including reflected heat from the reflector) may be delivered directly to the cooking object without interference from the air flow, and the cooking object may be cooked by the radiant heat delivered directly from the heat source 110.

When the fan stops, the cooking apparatus 1 may measure the stop period of the fan 150 using a clock or the like. For example, the stop period of the fan 150 may be measured by increasing the count value periodically as described above. The count value for measuring the stop period of the fan 150 may be set to be reset when the fan restarts operation.

According to the embodiment, in this case, the cooking apparatus 1 may also determine whether the operation period of the cooking apparatus 1 exceeds the cooking setting period (1015).

As a result of comparison, when it is determined that the operating period of the cooking apparatus 1 exceeds the cooking setting period (YES in 1015), the cooking apparatus 1 may control the heat source switching portion 119 to cut off the power applied to the heat source 110, and finish the cooking operation by preventing heat from being emitted from the heat source 110 (1018).

When it is determined that the operating period of the cooking apparatus 1 does not exceed the cooking setting period (NO in 1015), the cooking apparatus 1 may compare the counted stop period of the fan 150 with the second setting period (1016). The second setting period may be determined by the user, or may be determined according to a predetermined setting in the cooking apparatus 1. For example, the second setting period may be determined to be approximately 5 seconds. When the second setting period is determined according to a predetermined setting in the cooking apparatus 1, the second setting period may be set according to a theoretical calculation or an experimental measurement result. The second setting period may be set equal to or different from the first setting period. In this case, the second setting period may be set to be relatively shorter than the first setting period. On the other hand, when the second setting period is set too short, the period in which the radiant heat emitted from the heat source 110 is directly transmitted to the cooking object is relatively shortened. When the second setting period is set too long, it may lead to malfunction, failure and defect of the cooking apparatus 1, and thus it may be appropriate that the second setting period is appropriately set.

When the cooking apparatus 1 determines that the period in which the operation of the fan 150 is stopped is shorter than the second setting period (NO in 1016), the cooking apparatus 1 may maintain the fan 150 still stopped and allow the heat source 110 to continue to operate (1014).

Conversely, when the cooking apparatus 1 determines that the period in which the operation of the fan 150 is stopped is equal to or exceeds the second setting period (yes in 1016), the cooking apparatus 1 may again allow the fan 150 to start operating (1011).

According to the embodiment, in this case, the cooking apparatus 1 may determine whether the operating period of the cooking apparatus 1 exceeds the cooking setting period (1017). For example, when the operating time of the cooking apparatus 1 exceeds the cooking setting period (yes in 1017), the cooking apparatus 1 may finish the cooking operation and cut off the power applied to the heat source 110 to prevent heat from being emitted from the heat source 110. Conversely, when the operating time of the cooking apparatus 1 is smaller than the cooking setting period (NO in 1017), the cooking apparatus 1 may allow the fan 150 to restart operation as described above (1011).

Depending on the embodiment, processes (1012, 1015, and 1017) for determining whether or not the total operating period of the cooking apparatus 1 exceeds the cooking setting period may be performed at an arbitrary point of time different from that described above according to the designer's selection. At least one of the plurality of processes (S1012, S1015, S1017) for determining whether or not the total operation period of the cooking apparatus 1 shown in FIG. 27 exceeds the cooking setting period may be omitted depending on the designer's selection.

FIG. 28 is a second flowchart illustrating a control method of the cooking apparatus according to an embodiment.

According to the embodiment, the second inputter 94 may be further provided in the cooking apparatus 1. After the steps 1000 to 1018 described above are performed, when the user operates the second inputter 94, the cooking apparatus 1 may perform additional cooking for a preset period of time.

Particularly, referring to FIG. 28, when the user operates the second inputter 94 (YES in 1020) after finishing the cooking (1018), the cooking apparatus may operate the heat source 110 and the fan 150 again in response to the operation of the second inputter 94 (1021). When the second inputter 94 is not operated (NO in 1020), the cooking operation of the cooking apparatus 1 may be finally finished (1027). Depending on the embodiment, it is also possible for the cooking apparatus 1 to perform another corresponding cooking operation according to the manipulation of another inputter by the user, such as the manipulation of the third inputter 95.

When the heat source 110 and the fan 150 restart operation (1021), the heat source 110 may emit heat and the fan 150 may rotate to introduce the external air into the cooking apparatus 1 as described above.

According to the embodiment, the cooking apparatus 1 may measure the operation time of the fan 150 by using a clock or the like when the fan 150 starts operation. The count value related to the operating time of the fan 150 may be reset when the fan 150 stops operating.

According to the embodiment, when the heat source 110 and the fan 150 restart operation and thus additional cooking begins (1021), the cooking apparatus 1 may determine whether the additional operating period of the cooking apparatus 1 exceeds an additional cooking setting period (1022). The additional setting period may represent the period in which the cooking apparatus 1 operates for additional cooking and may be determined by the user or designer's selection. For example, the additional cooking setting period may be approximately 30 seconds, and the additional cooking setting period may be variously set within the range that the user desires or may be considered by the designer.

When the additional operating period of the cooking apparatus 1 is equal to or exceeds the additional cooking setting period (yes in 1022), the cooking apparatus 1 may determine that the time required for additional cooking has elapsed, and control the heat source switching portion 119 and the fan driver to finish the cooking operation (1027).

On the contrary, when the additional operation period is smaller than the additional cooking setting period (NO in 1022), the cooking apparatus 1 may compare the counted operation period of the fan 150 with the third setting period (1023). The third setting period may be determined by a user or determined by the cooking apparatus 1. The third setting period may be set equal to or different from the first setting period. According to the embodiment, the third setting period may be shorter than the first setting period.

When the operation period of the fan 150 is shorter than the third setting period (NO in 1023), the controller 400 of the cooking apparatus 1 may control the fan 150 to maintain the rotating operation continuously, and the fan 150 may continue to introduce air from the outside into the cooking apparatus 1. The heat source 110 may continuously generate heat regardless of the operation of the fan 150, as described above.

When the operation period of the fan 150 is equal to the third setting period or exceeds the third setting period (YES in 1023), the controller 400 of the cooking apparatus 1 may control the fan to stop operating. Accordingly, the external air may be not introduced into the cooking apparatus 1 (1024). As a result, the radiant heat emitted from the heat source 110 may be transferred directly or after being reflected from the reflector 130 to the cooking object without interference from the air flow.

Depending on the embodiment, the cooking apparatus 1 may further determine whether the additional operating period exceeds an additional cooking setting period (1025).

When it is determined that the operation period of the cooking apparatus 1 is longer than the cooking setting period (YES in 1025), the cooking apparatus 1 may finish the cooking operation (1027).

Conversely, when it is determined that the additional operation period of the cooking apparatus 1 does not exceed the additional cooking setting period (NO in 1025), the cooking apparatus 1 may compare the stop period of the fan 150 with the fourth setting period (1026). The fourth setting period may be determined by the user, or may be determined as previously programmed in the cooking apparatus 1. The fourth setting period may be set equal to or different from the second setting period. According to the embodiment, the fourth setting period may be set shorter than the second setting period.

In this case, when the stop period of the fan 150 is shorter than the fourth setting period (NO in 1026), the fan 150 may continue to be in the stopped state, and thus the external air may be not introduced into the cooking apparatus 1 (1024). As described above, the heat source 110 may continuously generate heat regardless of the operation of the fan 150. As a result, the radiant heat emitted from the heat source 110 will continue to be delivered directly to the cooking object without interference from the air flow, either directly or after being reflected from the reflector 130.

When the operation period of the fan 150 is equal to the fourth setting period or exceeds the fourth setting period (YES in 1026), the fan 150 may restart operation and introduce the external air into the cooking apparatus 1 (1021). Accordingly, the air may be introduced into the cooking chamber 10 of the cooking apparatus 1 to form convection heat. Also, according to the embodiment, the electronic component chamber 50 inside the cooking apparatus 1 may be cooled by the air introduced from the outside.

In the same manner as described above, the determination processes (1022 and 1025) of whether the additional operation period of the cooking apparatus 1 exceeds the additional cooking setting period may be performed at an arbitrary point of time different from that described above according to the designer's selection. Also, at least one of the plurality of processes (S1022 and S1025) for determining whether or not the total operation period of the cooking apparatus 1 shown in FIG. 28 exceeds the cooking setting period may be omitted according to the designer's selection.

The method of controlling the cooking apparatus according the above-described embodiment may be implemented in the form of a program executed by a variety of computer means. The program may include program instructions, data files, and data structures as itself or a combination therewith. The program may be designed or manufactured by using higher level code executed by the computer by using an interpreter, as well as by using a machine code that is produced by a compiler. In addition, the program may be particularly designed to implement the control method of the above mentioned image acquisition apparatus or may be implemented by using various functions or definition that are well-known and available to a group of ordinary skill in the computer software field.

Programs for implementing the method of controlling the cooking apparatus may be recorded on a recording medium readable by a computer. The recording medium readable by a computer may include various types of hardware devices capable of storing a particular program executed in response to a call from a computer, e.g. magnetic disk storage media such as a hard disk or a floppy disk, optical media such as a magnetic tape, a compact disc (CD) or a DVD, magneto-optical media such as a floptical disk, and semiconductor memory devices such as ROM, RAM, or flash memory.

Hereinbefore a variety of embodiments of the cooking apparatus and the method of controlling the cooking apparatus are described, but is not limited thereto. A variety of embodiments which is implementable by those skilled in the art by correcting and modifying based on the above mentioned embodiment may correspond to the above-mentioned the cooking apparatus and the method of controlling the cooking apparatus. For example, when the above-mentioned techniques is executed in a different order from the above-mentioned method, and/or the above-mentioned components such as system, structure, device and circuit is coupled or combined in a manner different from the above-mentioned method or is replaced or substituted by other components or equivalents, the same or the similar result as the above-mentioned the cooking apparatus and the method of controlling the cooking apparatus may be achieved and those may correspond to an example of the above-mentioned the cooking apparatus and the method of controlling the cooking apparatus.

## Claims

1. A cooking apparatus comprising:
a cooking chamber with a cooking space formed inside the cooking chamber;
a heat source installed inside the cooking chamber, and configured to emit heat;
a reflector configured to receive a portion of the heat emitted from the heat source, and to reflect the received heat to the cooking space; and
a fan configured to operate or stop operating while heat is being emitted from the heat source, and to introduce air into the cooking chamber during the operation.

2. The cooking apparatus according to claim 1,
wherein the fan alternates between the operation and the stop according to a predetermined pattern.

3. The cooking apparatus according to claim 2,
wherein the fan operates during a first period and stops during a second period which is relatively shorter than the first period.

4. The cooking apparatus according to claim 3,
wherein a convection heat is generated in the cooking chamber during the first period, and the convection heat disappears in the cooking chamber during the second period.

5. The cooking apparatus according to claim 1,
wherein the fan introduces external air and transfers the introduced air into the cooking chamber.

6. The cooking apparatus according to claim 5,
further comprising:
a hole formed on an outer surface of the cooking chamber and configured to allow the air introduced through the fan to be introduced into the cooking chamber; and
a duct configured to guide the air introduced by the fan to the hole.

7. The cooking apparatus according to claim 5, further comprising:
a microwave emitter configured to be cooled by the air introduced by the fan.

8. The cooking apparatus according to claim 1, further comprising:
a first inputter configured to receive a user command related to the operation of the heat source and the fan.

9. The cooking apparatus according to claim 8,
wherein the heat source emits heat in response to manipulation of the first inputter, and the fan operates or stops according to a predefined pattern.

10. The cooking apparatus according to claim 1, further comprising:
a second inputter configured to receive a user command related to the additional operation of at least one of the heat source or the fan after the heat source has finished emitting the heat.

11. The cooking apparatus according to claim 1,
wherein the reflector is recessed in a direction opposite to the cooking space.

12. A method of controlling a cooking apparatus, comprising:
generating heat in a heat source provided inside a cooking chamber, and transferring some of the generated heat into the cooking chamber by being reflected by the reflector;
generating convection heat by introducing the air into the cooking chamber according to operating of a fan; and
stopping the operation of the fan according to a predetermined setting.

13. The method according to claim 12, further comprising:
manipulating a first inputter, and starting operation of the cooking apparatus according to manipulation of the first inputter.

14. The method according to claim 12, further comprising:
operating and stopping the fan repeatedly until a predetermined time.

15. The method according to claim 14,
wherein the predetermined time comprises a preset cooking finish time.
